# EUROPÄISCHE PATENTSCHRIFT

(11) **EP 2 886 415 B1**
(45) Veröffentlichungstag und Bekanntmachung des Hinweises auf die Patenterteilung: **28.02.2018**
(21) Anmeldenummer: 14197251.3
(22) Anmeldetag: 10.12.2014
(51) Int. Cl.: B61L 15/00, G01C 21/36

(54) **Fahrerassistenzsystem eines Schienenfahrzeugs und Verfahren zur Anzeige einer Fahrempfehlung**
Driver assistance system of a rail vehicle and method for displaying a driving recommendation
Système d'assistance au conducteur d'un véhicule sur rails et procédé d'affichage d'un itinéraire recommandé

(30) Priorität: 18.12.2013 DE 102013114302
(43) Veröffentlichungstag der Anmeldung: 24.06.2015
(73) Patentinhaber: KNORR-BREMSE Systeme für Schienenfahrzeuge GmbH, 80809 München (DE)
(72) Erfinder: Walter, Manfred, 85375 Neufahrn (DE)

(56) Entgegenhaltungen:
- DE-A1-102006 005 613
- DE-A1-102011 013 009
- US-A1- 2009 005 975
- US-A1- 2009 073 327
- US-A1- 2009 192 677

## Beschreibung

Die vorliegende Erfindung betrifft ein Fahrerassistenzsystem eines Schienenfahrzeugs gemäß dem Oberbegriff des Anspruchs 1 sowie ein Verfahren zur Anzeige einer Fahrempfehlung. Aus dem Stand der Technik sind Fahrerassistenzsysteme bekannt, welche dem Fahrzeugführer im Schienenverkehr beispielsweise die Richtung der Fahrt oder Fahrempfehlungen berechnen und anzeigen, um eine möglichst pünktliche und/oder energiesparende Fahrweise zu erreichen.

Die von dem Fahrerassistenzsystem berechneten Fahrempfehlungen werden üblicherweise durch Anzeige entsprechender Weisungen auf einem Bildschirm des Fahrerassistenzsystems ausgegeben. Dabei besteht bei Nacht die Gefahr, dass der Fahrzeugführer durch einen solchen Bildschirm geblendet wird, da dieser Bildschirm sich üblicherweise im direkten Sichtfeld des Fahrzeugführers befindet, dadurch bei Nacht der Bildschirm die hellste Lichtquelle mit der größten Leuchtdichte darstellt und das Auge des Fahrzeugführers bedingt durch die ansonsten dunkle Umgebung deutlich empfindlicher gegenüber Lichtquellen eingestellt ist als bei Tag.

Um eine Blendung durch den Bildschirm zu vermeiden, wird die Helligkeit der Anzeige daher manuell so verändert, dass die Leuchtdichte des Bildschirms deutlich herabgesetzt ist. Dieses Herunterregeln führt allerdings dazu, dass infolge der Reduktion der Helligkeit auch der Kontrast und damit die Ablesbarkeit der ausgegebenen Fahrempfehlungen schlecht bis gar nicht ablesbar sind. Wird daraufhin die Helligkeiten wieder ein Stück weit erhöht, führt dies in der Regel wieder zu einer Blendung des Fahrzeugführers.

Aufgabe der vorliegenden Erfindung ist es, ein Fahrerassistenzsystem eines Schienenfahrzeugs sowie ein Verfahren zur Anzeige einer Fahrempfehlung auf einem Bildschirm eines solchen Fahrerassistenzsystems bereitzustellen, mit dem die oben genannten Nachteile vermieden werden.

Diese Aufgabe wird durch ein Fahrerassistenzsystem eines Schienenfahrzeugs mit den Merkmalen des Anspruchs 1 sowie durch ein Verfahren zur Anzeige einer Fahrempfehlung auf einem Bildschirm eines Fahrerassistenzsystems mit den Merkmalen des Anspruchs 7 gelöst.

Das erfindungsgemäße Fahrerassistenzsystem eines Schienenfahrzeugs, insbesondere eines Triebzugs oder einer Lokomotive, weist eine Steuereinheit auf, mit der eine Fahrempfehlung für einen Fahrer eines Schienen- oder Straßenfahrzeugs kalkuliert wird sowie einen Anschluss an eine im Schienenfahrzeug installierten Empfänger eines globalen Navigationssatelliten-Systems sowie einen an die Steuereinheit angeschlossenen Bildschirms zur Anzeige von die kalkulierte Fahrempfehlung wiedergebenden Zeichen. Der Bildschirm des Fahrerassistenzsystems ist dabei zwischen einem Tagmodus und einem Nachtmodus umschaltbar und die Steuereinheit ist derart ausgelegt, dass bei in den Nachtmodus geschaltetem Bildschirm die Steuereinheit im Falle einer Änderung einer kalkulierten Fahrempfehlung ein Ausgabesignal zum Ansteuern des Bildschirms von einem verdunkelten in einen erhellten Zustand und zur Anzeige der die Fahrempfehlung wiedergebenden Zeichen auf dem Bildschirm ausgibt.

Durch ein Fahrerassistenzsystem mit einer derart ausgelegten Steuereinheit ist es ermöglicht, dass dem Fahrzeugführer nur im Falle einer als notwendig erachteten Änderung des momentanen Fahrmodus ein Hinweis auf dem Bildschirm des Fahrerassistenzsystems angezeigt wird und dadurch eine als störend empfundene Dauerhelligkeit des Bildschirms unterbunden ist.

Vorteilhafte Ausführungsvarianten der Erfindung sind Gegenstand der Unteransprüche. Erfindungsgemäß ist die Steuereinheit derart ausgelegt, dass die Anzeige der die kalkulierte Fahrempfehlung wiedergebenden Zeichen auf dem Bildschirm von dem verdunkelten Zustand in den erhellten Zustand steuerbar sind, so dass die Zeichen auf dem ansonsten dunklen Bildschirm sichtbar sind. Dadurch wird eine nur geringe Erhellung des Bildschirms ermöglicht.

Gemäß einer vorteilhaften Ausführungsvariante weist der Bildschirm eine berührungssensitive Oberfläche auf, wobei durch Berühren der Bildschirmoberfläche von der Steuereinheit auswertbare Befehlssignale eingebbar sind. So ist es gemäß einer bevorzugten Ausführungsvariante vorgesehen, dass der Bildschirm im Nachtmodus durch Berühren der Bildschirmoberfläche aufhellbar und/oder verdunkelbar ist, so dass damit der Fahrzeugführer in einfacher Weise durch bloßes Berühren der Bildschirmoberfläche die Bildschirmanzeige wahlweise verdunkeln oder erhellen kann. Nach einer besonders bevorzugten Ausführungsvariante ist die Aufhellung und/oder Verdunklung des Bildschirms im Nachtmodus schrittweise steuerbar. Damit ist eine allmähliche Adaption des Auges des Fahrzeugführers an die Helligkeitsänderung ermöglicht.

Bei dem erfindungsgemäßen Verfahren zur Anzeige einer Fahrempfehlung auf einem Bildschirm eines Fahrerassistenzsystems eines Schienen- oder Straßenfahrzeugs wird zunächst die Position und aktuelle Geschwindigkeit und/oder Fahrtrichtung des Schienen- oder Straßenfahrzeugs erfasst. Anschließend erfolgt eine Auswertung der aufgenommen Daten in einer Steuereinheit des Fahrerassistenzsystems. Sodann erfolgt ein Vergleich der aufgenommen Daten des Schienenfahrzeugs mit einer vorabberechneten Sollgeschwindigkeit und/oder Sollposition für den aktuell gefahrenen Streckenabschnitt und schließlich erfolgt eine Aktivierung des Bildschirms und die Anzeige einer Änderungsinformation auf dem Bildschirm, sofern die aufgenommen Daten nicht mit der Sollgeschwindigkeit und/oder Sollposition für den aktuell gefahrenen Streckenabschnitt übereinstimmt.

Das erfindungsgemäße Verfahren hat demnach den Vorteil, dass zum einen eine Anzeige einer Fahrempfehlung nur dann erfolgt, wenn ein Eingreifen in den aktuellen Fahrmodus notwendig ist oder nach Berechnung der Steuereinheit sinnvoll erscheint und zum zweiten wird durch die Aktivierung des Bildschirms im Falle der Ausgabe einer solchen Änderungsinformation die Aufmerksamkeit des Fahrers in besonderer Weise erregt. Dies ist bei im Schienenverkehr üblichen Fahrerassistenzsystemen hilfreich, da diese in der Regel über keine akustische Ausgabe verfügen.

Nach einer besonders vorteilhaften Ausführungsvariante des erfindungsgemäßen Verfahrens erfolgt die Aktivierung des Bildschirms über einen vordefinierten Zeitraum, wobei nach Ablauf dieses vordefinierten Zeitraums der Bildschirm wieder deaktiviert wird und sich damit wieder verdunkelt.

Nach einer weiteren Ausführungsvariante des erfindungsgemäßen Verfahrens wird die Ansteuerung einer Aufhellung des Bildschirms vor der Ausgabe einer Fahrempfehlung angesteuert. Diese Vorlaufzeit der Aufhellungsansteuerung des Bildschirms ist dabei bevorzugt variabel einstellbar.

Nachfolgend wird eine Ausführungsvariante des erfindungsgemäßen Fahrerassistenzsystems und des erfindungsgemäßen Verfahrens anhand der beiliegenden Figuren näher erläutert. Es zeigen:
- Figur 1: eine schematische Darstellung eines Schienenfahrzeugs mit darin installiertem Fahrerassistenzsystem,
- Figur 2: zeigt dabei ein schematisches Ablaufdiagramm des erfindungsgemäßen Verfahrens.

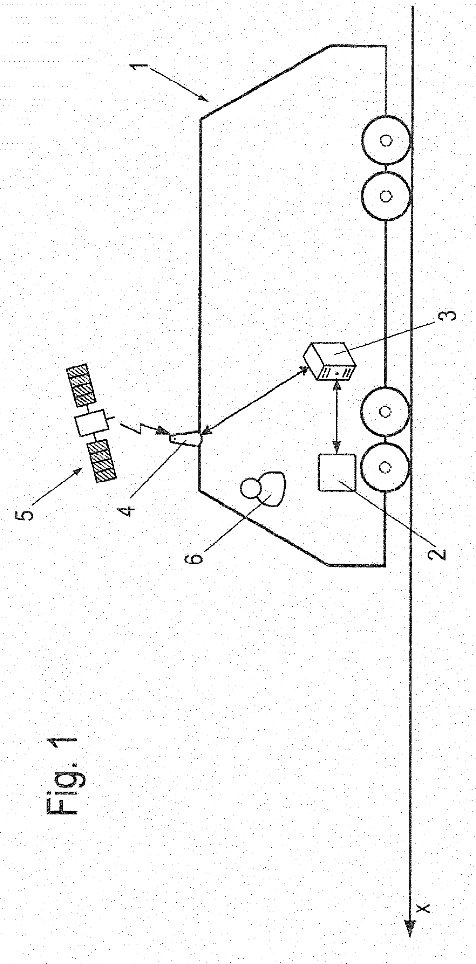

In der Figur 1 ist mit dem Bezugszeichen 1 ein Schienenfahrzeug bezeichnet, in dem ein Fahrerassistenzsystem installiert ist, das im Wesentlichen eine Steuereinheit 3, einen Bildschirm 2 und einen Anschluss an einen Empfänger 4 eines globalen Navigationssatelliten-Systems 5 aufweist. Der Bildschirm 2 ist dabei nach einer bevorzugten Ausführungsvariante lediglich elektrisch an die Steuereinheit 3 angeschlossen, kann aber auch nach einer alternativen Ausführungsvariante zusammen mit der Steuereinheit 3 eine Baueinheit bilden.

Im nachfolgenden wird das Fahrerassistenzsystem anhand eines in einem Schienenfahrzeug installierten Fahrerassistenzsystem beschrieben, denkbar ist aber auch die Installation eines solchen Fahrerassistenzsystems in einem Straßenfahrzeug, in dem das Fahrerassistenzsystem im Wesentlichen der Navigation dient, wohingegen das Fahrerassistenzsystem eines Schienenfahrzeugs, wie hier beschrieben, im Wesentlichen der Berechnung und Anzeige einer pünktlichen und energiesparenden Fahrweise dient.

Die mithilfe der Steuereinheit des Fahrerassistenzsystems berechnete Fahrempfehlung basiert dabei auf der Erfassung physikalischer Daten des Schienen- oder Straßenfahrzeugs 1, der Fahrtstrecke, für die die Fahrempfehlung berechnet werden soll und der aktuellen Geschwindigkeit während der Fahrt. Insbesondere die Geschwindigkeit und die aktuelle Position wird dabei kontinuierlich oder in voreingestellten zeitlichen Abständen über die am Schienen- oder Straßenfahrzeug 1 installierten Empfänger 4, über den Daten eines globalen Navigationssatelliten-Systems 5 empfangbar sind.

Aus diesen Daten werden jeweilige Fahrempfehlungen berechnet, die dann auf dem Bildschirm 2 des Fahrerassistenzsystems angezeigt werden, wobei dieser Bildschirm 2 üblicherweise im Sichtfeld eines Fahrzeugführers 6 im Cockpit des Schienenfahrzeugs 1 installiert ist.

Da derartige Bildschirme üblicherweise zur Anzeige der die Fahrempfehlung wiedergebenden Zeichen Leuchtdichten von 200 bis 300 Cd/m² aufweisen, führen diese Bildschirme bei einer Nachtfahrt regelmäßig zu einer Blendung des Fahrzeugführers 6. Um eine solche dauerhafte Blendung des Fahrzeugführers 6 durch den Bildschirm 2 zu vermeiden, ist der Bildschirm durch die Steuereinheit 3 zwischen einem Tagmodus und einem Nachtmodus umschaltbar. Die Steuereinheit 3 ist dabei derart ausgelegt, dass bei in dem Nachtmodus geschaltetem Bildschirm die Steuereinheit 3 im Falle einer Änderung einer kalkulierten Fahrempfehlung ein Ausgabesignal zum Ansteuern des Bildschirms 2 von einem verdunkelten in einen erhellten Zustand und zur Anzeige der die Fahrempfehlung wiedergebenden Zeichen auf dem Bildschirm 2 ausgibt.

Die Umschaltung des Bildschirms 2 vom Tag- in den Nachtmodus bzw. umgekehrt erfolgt dabei nach einer Ausführungsvariante über einen vorzugsweise im Fahrzeugführerraum, insbesondere am Gehäuse des Bildschirms 2 oder im Fahrzeugcockpit, vorgesehenen Helligkeitssensor, der die Helligkeit im Fahrzeugführerraum misst und bei einer vorbestimmten Helligkeitsschwelle ein entsprechendes Signal an die Steuereinheit zur Umschaltung des Bildschirms vom Tagmodus in den Nachtmodus bzw. umgekehrt gibt. Dabei ist nach einer Ausführungsvariante der Schwellwert für die Umschaltung vom Tag- in den Nachtmodus des Bildschirms 2 gleich dem Schwellwert für die Umschaltung vom Nacht- in den Tagmodus sein. In einer alternativen Ausführungsvariante ist der Schwellwert für die Umschaltung vom Tag- in den Nachtmodus des Bildschirms 2 verschieden von dem Schwellwert für die Umschaltung vom Nacht- in den Tagmodus, wobei bevorzugt die Umschaltung vom Tag- in den Nachtmodus bei geringerer Helligkeit erfolgt als die Umschaltung vom Nacht- in den Tagmodus.

Denkbar ist auch eine manuelle Umschaltung oder eine Umschaltung über eine in der Steuereinheit 3 enthaltene Zeitsteuerung, in der die Tag- und Nachtzeiten der abzufahrenden Strecke abgespeichert sind.

In einem verdunkelten oder inaktiven Zustand des Bildschirms 2 ist dieser dabei bevorzugt vollständig verdunkelt und wird erfindungsgemäß nur dann erhellt, wenn ein Eingreifen in den aktuellen Fahrmodus notwendig ist oder sinnvoll erscheint. Eine solche Änderungsanzeige besteht dabei beispielsweise in einer Anzeige einer empfohlenen reduzierten oder erhöhten Fahrgeschwindigkeit oder im Falle eines Straßenfahrzeugs in einer empfohlenen Richtungsänderung.

Der erhellte Zustand des Bildschirms 2 muss dabei nicht der vollen maximalen Leuchtdichte des Bildschirms entsprechen, die im Tagmodus des Bildschirms angesteuert wird, sondern wird im Nachtmodus des Bildschirms bevorzugt auf ein geringeres Maß erhellt, da das menschliche Auge in ansonsten dunkler Umgebung deutlich lichtempfindlicher reagiert und dementsprechend auch Zeichen mit deutlich geringeren Leuchtdichten hinreichend wahrnimmt. So ist bevorzugt eine Anzeige von die Fahrempfehlung wiedergebenden Zeichen auf dem Bildschirm mit einer Leuchtdichte im Bereich von 1 bis 100 Cd/m² möglich.

Um eine Adaption des menschlichen Auges an die Helligkeit der Fahrempfehlungsanzeige zusätzlich zu erleichtern, ist die Aufhellung und/oder Verdunklung des Bildschirms schrittweise angesteuert, so dass sich das Auge an die Erhellung bzw. Verdunklung gewöhnen kann.

Die Aufhellung des Bildschirms 2 bei der Anzeige einer aktuellen Fahrempfehlung erfolgt dabei insbesondere durch Aufhellung der die Fahrempfehlung wiedergebenden Zeichen. Die Aufhellung des gesamten Bildschirms 2, welche das Erkennen zusätzlicher Informationen ermöglicht, erfolgt dabei bevorzugt durch aktive Aufhellung des Bildschirms 2 durch den Fahrzeugführer. Dazu ist der Bildschirm des Fahrerassistenzsystems bevorzugt mit einer berührungssensitiven Oberfläche versehen, so dass durch Berühren der Bildschirmoberfläche von der Steuereinheit 3 auswertbare Befehlssignale eingebbar sind. Die berührungssensitive Oberfläche ist dabei vorzugsweise als resistives System oder als oberflächenkapazitives System ausgebildet, denkbar sind aber auch andere bekannte berührungssensitive Oberflächen.

Die Steuereinheit ist dabei bevorzugt so ausgelegt, dass der Bildschirm im Nachtmodus durch Berühren der Bildschirmoberfläche aufhellbar und/oder verdunkelbar ist, so dass der Fahrzeugführer 6 bei Bedarf jederzeit eine Erhellung bzw. Verdunklung des Bildschirms aktiv durch einfaches Berühren der Bildschirmoberfläche herbeiführen kann.

Nach erfolgter Aufhellung des Bildschirms 2 infolge eines von der Steuereinheit ausgegebenen Ausgabesignals zur Anzeige einer aktuellen Fahrempfehlung ist die Steuereinheit bevorzugt so ausgelegt, dass die Aufhellung nur für einen begrenzten Zeitraum erfolgt und anschließend der Bildschirm sich wieder verdunkelt.

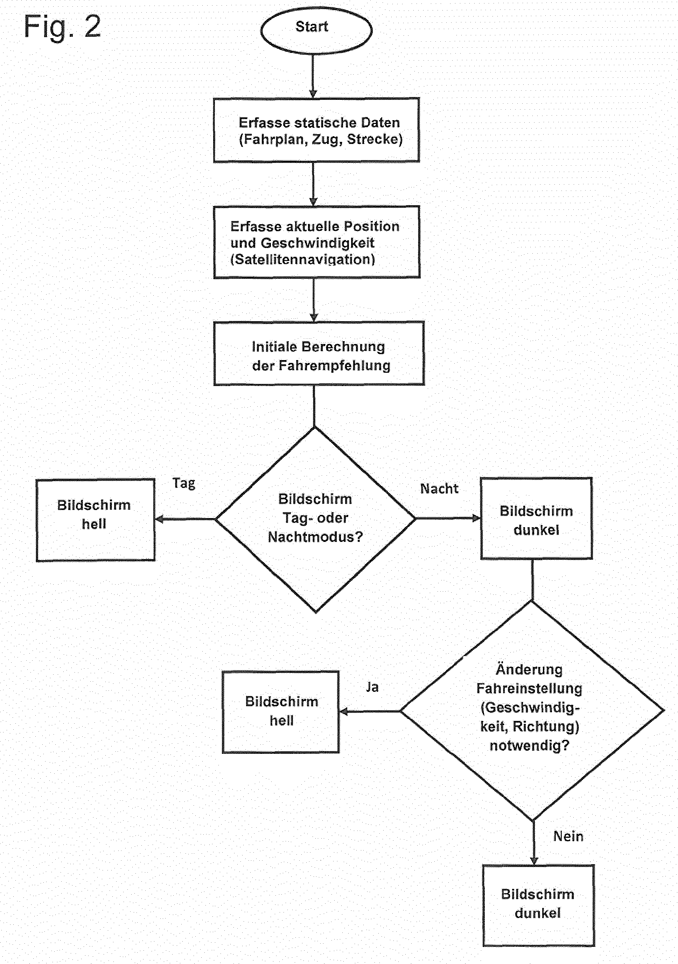

Ein solcher Ablauf zur Anzeige einer Fahrempfehlung auf einen Bildschirm eines Fahrerassistenzsystems eines Schienenfahrzeugs 1 in einem solchen Nachtmodus ist beispielhaft in Figur 2 dargestellt. Dabei erfolgt nach der Erfassung der Position und aktuellen Geschwindigkeit und/oder Fahrtrichtung des Schienenfahrzeugs 1 eine Auswertung der aufgenommenen Daten in einer Steuereinheit 3 des Fahrerassistenzsystems. Im Anschluss daran erfolgt ein Vergleich der derart aufgenommen Daten in der Steuereinheit mit einer Vorort berechneten Sollgeschwindigkeit und/oder Sollposition für einen aktuell befahrenen Streckenabschnitt. Im Anschluss daran wird geprüft, ob eine Änderungsinformation auf den Bildschirm ausgegeben werden soll. Falls dies der Fall ist erfolgt die Ausgabe eines Aufhellungssignals an den Bildschirm, um die Änderungsinformation auf den Bildschirm für den Fahrzeugführer 6 sichtbar anzuzeigen. Falls die Prüfung ergibt, dass derzeit keine Änderung des aktuellen Fahrmodus notwendig ist, bleibt der Bildschirm 2 dunkel.

Die Ansteuerung einer Aufhellung des Bildschirms 2 wird dabei bevorzugt zeitlich vor der Ausgabe der Fahrempfehlung angesteuert, insbesondere mit einer variabel einstellbaren Vorlaufzeit.

Die Aktivierung bzw. Aufhellung des Bildschirms 2 entspricht dabei nach einer Ausführungsvariante einer Aufhellung des gesamten Bildschirms 2. Alternativ werden durch die Aufhellung lediglich die die Fahrempfehlung wiedergebenden Zeichen erhellt.

### Bezugszeichenliste

- 1: Schienenfahrzeug
- 2: Bildschirm
- 3: Steuereinheit
- 4: Empfänger
- 5: Navigationssatelliten-System
- 6: Fahrzeugführer

## Patentansprüche

1. Fahrerassistenzsystem eines Schienenfahrzeugs (1), insbesondere eines Triebzugs oder einer Lokomotive, aufweisend
- eine Steuereinheit (3), mit der eine Fahrempfehlung für einen Fahrer des Schienenfahrzeugs (1) kalkulierbar ist,
- einen Anschluss an einen im Schienenfahrzeug (1) installierten Empfänger (4) eines globalen Navigationssatellitensystems (5),
- einen an die Steuereinheit (3) angeschlossenen Bildschirm (2) zur Anzeige von die kalkulierte Fahrempfehlung wiedergebenden Zeichen,
- wobei die kalkulierte Fahrempfehlung eine Fahrgeschwindigkeitsempfehlung enthält,
- wobei der Bildschirm (2) durch die Steuereinheit (3) zwischen einem Tagmodus in einem erhellten Zustand und einem Nachtmodus in einem verdunkelten Zustand umschaltbar ist,
- wobei die Steuereinheit (3) derart ausgelegt ist, dass bei in den Nachtmodus geschaltetem Bildschirm (2) die Steuereinheit (3) im Falle einer Änderung einer kalkulierten Fahrempfehlung ein Ausgabesignal zum Ansteuern des Bildschirms (2) von einem verdunkelten in einen erhellten Zustand und zur Anzeige der die Fahrempfehlung wiedergebenden Zeichen auf dem Bildschirm (2) ausgibt, **dadurch gekennzeichnet, dass** die Anzeige der die kalkulierte Fahrempfehlung
wiedergebenden Zeichen auf dem Bildschirm (2) von dem verdunkelten Zustand in den erhellten Zustand steuerbar sind, so dass die Zeichen auf dem ansonsten dunklen Bildschirm (2) sichtbar sind.

2. Fahrerassistenzsystem nach Anspruch 1 2, **dadurch gekennzeichnet, dass** der Bildschirm (2) eine berührungssensitive Oberfläche aufweist, wobei durch Berühren der Bildschirmoberfläche von der Steuereinheit (3) auswertbare Befehlssignale eingebbar sind.

3. Fahrerassistenzsystem nach Anspruch 2, **dadurch gekennzeichnet, dass** der Bildschirm (3) zumindest im Nachtmodus durch Berühren der Bildschirmoberfläche aufhellbar und/oder verdunkelbar ist.

4. Fahrerassistenzsystem nach Anspruch 1, **dadurch gekennzeichnet, dass** die Aufhellung und/oder Verdunklung des Bildschirms (2) im Nachtmodus schrittweise steuerbar ist.

5. Fahrerassistenzsystem nach einem der vorstehenden Ansprüche, **dadurch gekennzeichnet, dass** die Aufhellung und/oder Verdunklung des Bildschirms (2) im Nachtmodus über einen Helligkeitssensor steuerbar ist.

6. Fahrerassistenzsystem nach einem der vorstehenden Ansprüche, **dadurch gekennzeichnet, dass** der Bildschirm (2) und die Steuereinheit eine Baueinheit bilden.

7. Verfahren zur Anzeige einer Fahrempfehlung auf einem Bildschirm (2) eines Fahrerassistenzsystems eines Schienenfahrzeugs (1), wobei der Bildschirm durch die Steuereinheit zwischen einem Tagmodus in einem erhellten Zustand und einem Nachtmodus in einem verdunkelten Zustand umschaltbar ist, aufweisend die Verfahrensschritte:
- Erfassen der Position des Schienenfahrzeugs (1),
- Erfassen der aktuellen Geschwindigkeit und/oder Fahrtrichtung des Schienenfahrzeugs (1),
- Auswerten der aufgenommenen Daten in einer Steuereinheit (3) des Fahrerassistenzsystems,
- Vergleich der aufgenommenen Daten des Schienenfahrzeugs (1) mit einer vorab berechneten Sollgeschwindigkeit und/oder Sollposition für den aktuell befahrenen Streckenabschnitt,
- Aktivierung des Bildschirms (2) und Anzeige einer Änderungsinformation auf den Bildschirm (2), falls die aufgenommenen Daten nicht mit der Sollgeschwindigkeit und/oder Sollposition für den aktuell befahrenen Streckenabschnitt übereinstimmt,
- wobei die Aktivierung des Bildschirms (2) einer Aufhellung der die Fahrempfehlung wiedergebenden Zeichen entspricht,
- wobei die Steuereinheit bei in den Nachtmodus geschaltetem Bildschirm im Falle einer Änderung einer kalkulierten Fahrempfehlung ein Ausgabesignal zum Ansteuern des Bildschirms von einem verdunkelten in einen erhellten Zustand und zur Anzeige der die Fahrempfehlung wiedergebenden Zeichen auf dem Bildschirm ausgibt,
- und die Anzeige der die kalkulierte Fahrempfehlung wiedergebenden Zeichen auf dem Bildschirm von dem verdunkelten Zustand in den erhellten Zustand gesteuert werden, so dass die Zeichen auf dem ansonsten dunklen Bildschirm sichtbar sind.

8. Verfahren nach Anspruch 7, **dadurch gekennzeichnet, dass** die Aktivierung des Bildschirms (2) einer Aufhellung des Bildschirms (2) entspricht.

9. Verfahren nach Anspruch 7 oder 8, **dadurch gekennzeichnet, dass** die Aktivierung des Bildschirms (2) über einen vordefinierten Zeitraum erfolgt und nach Ablauf des vordefinierten Zeitraums der Bildschirm (2) wieder deaktiviert wird.

10. Verfahren nach einem der Ansprüche 7 bis 9, **dadurch gekennzeichnet, dass** die Aufhellung und/oder Verdunklung des Bildschirms (2) schrittweise angesteuert wird.

11. Verfahren nach einem der Ansprüche 7 bis 10, **dadurch gekennzeichnet, dass** die Ansteuerung einer Aufhellung des Bildschirms (2) zeitlich vor der Ausgabe der Fahrempfehlung angesteuert wird.

12. Verfahren nach Anspruch 11, **dadurch gekennzeichnet, dass** die Vorlaufzeit der Aufhellungsansteuerung variabel einstellbar ist.

## Claims

1. Driver assistance system of a rail vehicle (1), in particular a multiple-unit train or a locomotive, having:
- a control unit (3), with which a driving recommendation for a driver of the rail vehicle (1) can be calculated,
- a connection to a receiver (4) of a global navigation satellite system (5) installed in the rail vehicle (1),
- a video screen (2) connected to the control unit (3) for displaying signs that convey the calculated driving recommendation,
- wherein the calculated driving recommendation contains a driving speed recommendation,
- such that the video screen (2) can be switched by the control unit (3) between a daytime mode in which it is brighter and a night-time mode in which it is darker,
- wherein the control unit (3) is designed in such manner that when the video screen (2) is switched into the night-time mode, in the event of a change of a calculated driving recommendation the control unit (3) emits an output signal to change the video screen (2) from a darker to a brighter condition and to display the signs that convey the driving recommendation on the video screen (2), **characterised in that**
the display of the signs that convey the calculated driving recommendation on the video screen (2) can be changed from the darker condition to the brighter condition, so that the signs are visible on the otherwise dark video screen (2).

2. Driver assistance system according to Claim 1, **characterised in that** the video screen (2) has a touch-sensitive surface , such that by touching the video screen (2) command signals that can be evaluated by the control unit (3) can be emitted.

3. Driver assistance system according to Claim 2, **characterised in that** at least in the night-time mode the video screen (3) can be made brighter and/or darker by touching the surface of the video screen.

4. Driver assistance system according to Claim 1, **characterised in that** in the night-time mode the brightening and/or darkening of the video screen (2) can be controlled in steps.

5. Driver assistance system according to any of the preceding claims, **characterised in that** in the night-time mode the brightening and/or darkening of the video screen (2) can be controlled by means of a brightness sensor.

6. Driver assistance system according to any of the preceding claims, **characterised in that** the video screen (2) and the control unit (3) are combined in a single assembly.

7. Method for displaying a driving recommendation on a video screen (2) of a driver assistance system of a rail vehicle (1), wherein the video screen can be switched by the control unit between a daytime mode in which it is brighter and a night-time mode in which it is darker, the said method comprising the fo9llowing process steps:
- the position of the rail vehicle (1) is determined,
- the current speed and/or travel direction of the rail vehicle (1) is/are determined,
- the data collected are evaluated in a control unit (3) of the driver assistance system,
- the data of the rail vehicle (1) collected are compared with a previously calculated desired speed and/or desired position for the track section currently being travelled along,
- actuation of the video screen (2) and display of any change information on the video screen (2), if the data collected deviate from the desired speed and/or desired position for the track section currently being travelled along,
- such that the actuation of the video screen (2) corresponds to brightening of the signs that convey the driving recommendation,
- such that when the video screen is switched into the night-time mode, in the event of a change of a calculated driving recommendation the control unit emits an output signal for changing the video screen from a dark to a bright condition and for displaying the signs that convey the driving recommendation on the video screen,
- and the display of the signs conveying the calculated driving recommendation on the video screen is changed from the dark condition to the bright condition, so that the said signs are visible on the otherwise dark video screen.

8. Method according to Claim 7, **characterised in that** the activation of the video screen (2) corresponds to a brightening of the video screen (2).

9. Method according to Claims 7 or 8, **characterised in that** the video screen (2) is activated for a predetermined time and after the said predetermined time has lapsed, the video screen (2) is deactivated again.

10. Method according to any of Claims 7 to 9, **characterised in that** the brightening and/or darkening of the video screen (2) are controlled in steps.

11. Method according to any of Claims 7 to 10, **characterised in that** the brightening of the video screen (2) is activated before the output of the driving recommendation.

12. Method according to Claim 11, **characterised in that** the time preceding the brightening activation can be adjusted variably.

## Revendications

1. Système d'assistance au conducteur d'un véhicule (1) ferroviaire, notamment d'une rame automotrice ou d'une locomotive, comportant
- une unité (3) de commande, par laquelle un itinéraire recommandé à un conducteur du véhicule (1) ferroviaire peut être calculé,
- une connexion à un récepteur (4), monté dans le véhicule (1) ferroviaire, d'un système (5) de navigation global par satellite,
- un écran (2), raccordé à l'unité (3) de commande, pour afficher des signes reproduisant l'itinéraire recommandé calculé,
- l'itinéraire recommandé calculé comportant une recommandation de vitesse sur l'itinéraire,
- dans lequel l'écran (2) peut être commuté par l'unité (3) de commande entre un mode de jour, en un état éclairci, et un mode de nuit, en un état assombri,
- dans lequel l'unité (3) de commande est conçue pour, lorsque l'écran (2) est en mode de nuit, émettre, dans le cas d'une modification de l'itinéraire recommandé calculé, un signal d'émission pour faire passer l'écran (2) d'un état assombri à un état éclairci et pour afficher les signes reproduisant la recommandation d'itinéraire sur l'écran (2), **caractérisé**
**en ce que** les affichages sur l'écran (2) des signes reproduisant l'itinéraire recommandé calculé peuvent être commandés de l'état assombri à l'état éclairci, de manière à ce que les signes soient visibles sur l'écran (2) sombre sinon.

2. Système d'assistance au conducteur suivant la revendication 1, **caractérisé en ce que** l'écran (2) a une surface tactile, des signaux d'instruction exploitables par l'unité (3) de commande pouvant être entrés en touchant la surface de l'écran.

3. Système d'assistance au conducteur suivant la revendication 2, **caractérisé en ce que** l'écran peut être éclairci et/ou assombri, au moins en mode de nuit, en touchant la surface de l'écran.

4. Système d'assistance au conducteur suivant la revendication 1, **caractérisé en ce que** l'éclaircissement et/ou l'assombrissement de l'écran (2) peut être commandé pas à pas en mode de nuit.

5. Système d'assistance au conducteur suivant l'une des revendications précédentes, **caractérisé en ce que** l'éclaircissement et/ou l'assombrissement de l'écran (2) peut être commandé en mode de nuit par un capteur de la luminosité.

6. Système d'assistance au conducteur suivant l'une des revendications précédentes, **caractérisé en ce que** l'écran (2) et l'unité de commande forment une unité de construction.

7. Procédé d'affichage d'un itinéraire recommandé sur un écran (2) d'un système d'assistance au conducteur d'un véhicule (1) ferroviaire, l'écran pouvant être commuté par l'unité de commande entre un mode de jour, en un état éclairci, et un mode de nuit, en un état assombri, comportant les stades suivants :
- détection de la position du véhicule (1) ferroviaire,
- détection de la vitesse instantanée et/ou du sens de marche du véhicule (1) ferroviaire,
- exploitation des données enregistrées dans une unité (3) de commande du système d'assistance au conducteur,
- comparaison des données enregistrée du véhicule (1) ferroviaire à une vitesse de consigne et/ou à une position de consigne calculée auparavant pour le tronçon de voie parcouru présentement,
- activation de l'écran (2) et affichage d'une information de modification sur l'écran (2), si les données enregistrées ne coïncident pas avec la vitesse de consigne et/ou la position de consigne pour le tronçon de voie parcouru présentement,
- l'activation de l'écran (2) correspondant à un éclaircissement des signes reproduisant l'itinéraire recommandé,
- dans lequel l'unité de commande émet, lorsque l'écran est en mode de nuit, dans le cas d'une modification d'un itinéraire recommandé calculé, un signal d'émission pour faire passer l'écran d'un état assombri à un état éclairci et pour afficher sur l'écran les signes reproduisant l'itinéraire recommandé,
- et les affichages des signes reproduisant l'itinéraire recommandé calculé sur l'écran sont commandés pour passer de l'état assombri à l'état éclairci, de sorte que les signes sont visibles sur l'écran, sinon sombre.

8. Procédé suivant la revendication 7, **caractérisé en ce que** l'activation de l'écran (2) correspond à un éclaircissement de l'écran (2).

9. Procédé suivant la revendication 7 ou 8, **caractérisé en ce que** l'activation de l'écran (2) s'effectue sur un laps de temps défini à l'avance et on redésactive l'écran (2) après l'expiration du laps de temps défini à l'avance.

10. Procédé suivant l'une des revendications 7 à 9, **caractérisé en ce que** l'on commande pas à pas l'éclaircissement et/ou l'assombrissement de l'écran (2).

11. Procédé suivant l'une des revendications 7 à 10, **caractérisé en ce que** l'on commande un éclaircissement de l'écran (2) avant, dans le temps, l'émission de l'itinéraire recommandé.

12. Procédé suivant la revendication 11, **caractérisé en ce que** l'on règle de manière variable la durée précédant la commande d'éclaircissement.
